# EUROPÄISCHE PATENTSCHRIFT

(11) **EP 2 127 716 B1**
(45) Veröffentlichungstag und Bekanntmachung des Hinweises auf die Patenterteilung: **01.10.2014**
(21) Anmeldenummer: 09006806.5
(22) Anmeldetag: 20.05.2009
(51) Int. Cl.: B01D 24/10, B01D 35/26, E03B 3/03

(54) **Filtereinrichtung für Regenwasser-Sammelbehälter**
Filter device for rain water collection container
Dispositif de filtre pour récipient de collecte d'eau de pluie

(30) Priorität: 21.05.2008 DE 202008006940 U
(43) Veröffentlichungstag der Anmeldung: 02.12.2009
(73) Patentinhaber: Aquatum GmbH, 49610 Quakenbrück (DE)
(72) Erfinder: Schodt, Sylvia, 97941 Tauberbischofsheim (DE)
(74) Vertreter: Patentanwälte Olbricht Buchhold Keulertz

(56) Entgegenhaltungen:
- DE-A1- 10 120 410
- DE-A1- 19 860 860
- US-A- 3 817 378
- US-A- 5 350 505

## Beschreibung

Die Erfindung betrifft eine Filtereinrichtung für einen Regenwasser-Sammelbehälter gemäß dem Oberbegriff von Anspruch 1 sowie einen Regenwasser-Sammelbehälter nach Anspruch 9.

Der Schutz von natürlichen Ressourcen gewinnt immer mehr an Bedeutung. Vor diesem Hintergrund steht die Nutzung von Regenwasser oder Oberflächenwasser als Brauchwasser um wertvolles Trinkwasser einzusparen.

Es ist allgemein bekannt, dass im häuslichen Bereich für Autowaschen und Gartenbewässerung sowie für die Toilettenspülung und das Wäschewaschen Regenwasser eingesetzt und damit 50% und mehr an Trinkwasser eingespart werden kann. Ferner können im gewerblichen Bereich, z.B. für die Toilettenspülung in Bürohäusern, für Reinigungszwecke oder in der Produktion erhebliche Einsparungen erzielt werden. Die Reinigung von feststoffbelasteten Kreislaufwasserströmen ist ebenfalls ein weites Anwendungsgebiet.

Um Regenwasser für die genannten Zwecke nutzbar zu machen, wird es meist von Dachflächen kommend über ein Rinnen- bzw. Rohrsystem gefasst, mittels eines oder mehrerer Filter gereinigt und in einem Speicherbehälter (Zisterne) gesammelt. Von dort aus wird das Wasser über eine Pumpe in ein Brauchwassernetz gespeist. Übersteigt die z.B. während eines lang anhaltenden Regenereignisses anfallende Regenwassermenge die Aufnahmekapazität des Filters, leitet ein Notüberlauf das Wasser entweder ungefiltert in die Zisterne oder direkt in den Kanal. Reicht die Regenwassermenge aufgrund längerer Trockenheit nicht aus, wird die Zisterne automatisch oder manuell mit Trinkwasser aus dem Trinkwassernetz gefüllt.

Die Sauberkeit des gesammelten Brauchwassers hängt maßgeblich von den verwendeten Filtern ab. Oft werden feinmaschige Siebfilter eingesetzt, die je nach Maschenweite Partikel im Bereich zwischen 100 und 170 µm zurückhalten können. Feinere Partikel gelangen jedoch - ebenso wie im Regenwasser gelöste Verunreinigungen - ungehindert in den nachfolgenden Speicher; sie sedimentieren dort oder bilden eine Schwimmschicht. Faulprozesse lassen sich kaum vermeiden, die dem Regenwasser insbesondere im Sommer einen fauligen, modrigen Geruch verleihen. Um das Regenwasser nicht aus diesen Schlammzonen zu entnehmen sind zusätzliche Einbauten erforderlich, wie z.B. ein beruhigter Zulauf, um das Bodensediment nicht aufzuwirbeln und eine schwimmende Saugleitung, um nur das halbwegs feststoffarme Regenwasser zwischen Sediment- und Schwimmschlammschicht abzusaugen. Durch diese Einbauten beträgt das Nutzvolumen der Zisterne meistens nur noch 60-70% des Gesamtvolumens.

Die Filtersiebe sind so konstruiert, dass mit dem Zulauf auch eine Selbstreinigung erfolgt. Der Grad der Selbstreinigung ist bei den Systemen sehr unterschiedlich, so dass die feinen Siebe trotzdem in regelmäßigen Abständen gereinigt werden müssen.

Zusätzlich zu den Sieben werden in die Betonzisternen integrierte Sinterplatten eingesetzt, die ähnlich wie die Siebe bestimmte Partikelgrößen zurückhalten. Die zurückgehaltenen Partikel müssen in regelmäßigen Abständen entfernt werden.

Ferner kommen auch Filterkästen mit einem Drainagesystem zum Einsatz, die einem Kiesfilter nachempfunden sind. Die Reinigung dieses Systems erfolgt durch erheblichen manuellen Aufwand.

Ein ideales Filtersystem müsste die Feststoffe vollständig zurückhalten, die im Wasser gelösten Verunreinigungen abbauen und wartungsfrei sein. Neben diesen hohen technischen Anforderungen müssen die Kosten im üblichen Rahmen bleiben.

Ein in DE 198 60 860 beschriebenes Filtersystem kommt diesen Forderungen bereits recht nahe. Dieses weist eine an ein Regenwasser-Sammelrohr angeschlossene Zulaufleitung mit einer Filterzelle auf, die von der Zulaufleitung zugeführtes Regenwasser von Verunreinigungen befreit und über ein Entnahmerohr und einen Auslauf in einem Regenwasserspeicher mündet. Die Filterzelle ist als Kiesfilter ausgebildet. Die darin zurückgehaltenen Partikel werden regelmäßig durch eine automatische Spülung mit Hilfe von Ventilen aus dem Filter ausgetragen. Mit Hilfe einer Pumpe wird das gesammelte Regenwasser in ein Brauchwassernetz gespeist. Der Nachteil dieses Filtersystems liegt jedoch in der aufwendigen Einrichtung bzw. Vorrichtung zum Spülen der Filter. Dadurch wird der Einsatz dieses Filtersystems insbesondere bei Nachrüstung von Altanlagen zu aufwendig und zu teuer.

US 5 350 505 A offenbart ein Überlaufbecken mit einer Filtereinrichtung, die eine Filterzelle aufweist. Diese ist über einen Zulauf und eine Zulaufleitung an ein Regenwasser-Sammelrohr anschließbar. In der Filterzelle ist zwischen einem oberen und einem unteren Sieb ein Kornmassenbett ausgebildet, wobei gereinigtes Regenwasser durch das untere Sieb hindurch über eine Entnahmeleitung und einen Auslauf dem Regenwasser-Sammelbehälter zugeführt wird. Der Filterzelle ist zudem eine Spülwasserpumpe zugeordnet, die mit der Entnahmeleitung der Filterzelle strömungsverbunden ist. Beim Rückspülen des Filters mit der Spülwasserpumpe wird das Spülwasser durch das obere Sieb hindurch und über eine separate Entsorgungsleitung aus dem Filterelement abgeführt.

DE 101 20 410 A1 beschreibt ein Verfahren zum Betrieb einer Regenwasser-Nutzungsanlage. Diese ist mit einer Zisterne, in welche über einen Zulauf und eine Filtereinrichtung eingeleitetes Regenwasser gespeichert wird, und mit einer Einrichtung zur Entnahme von gespeichertem Regenwasser ausgestattet. Dabei liegt ein Filter im Übertritt zwischen dem Zulauf und dem Speicherraum der Zisterne

US 3 817 378 A zeigt einen Sammelbehälter mit einer Filtereinrichtung. Diese umfasst einen Zulauf, eine Verteilerplatte, ein darunter angeordnetes Kornmassenbett und ein das Kornmassenbett tragendes Siebelement.

Ziel der Erfindung ist es, diese und weitere Nachteile des Standes der Technik zu überwinden und eine Filtereinrichtung für einen Regenwasser-Sammelbehälter zu entwickeln, die mit einfachen Mitteln kostengünstig aufgebaut ist und ein Nachrüsten von Altanlagen bzw. das Austauschen des alten Filtersystems einfach und ohne großen Aufwand ermöglicht.

Hauptmerkmale der Erfindung sind im kennzeichnenden Teil von Anspruch 1 und in Anspruch 9 angegeben. Ausgestaltungen sind Gegenstand der Ansprüche 2 bis 8 und 10 bis 10.

Bei einer Filtereinrichtung für einen Regenwasser-Sammelbehälter, mit wenigstens einer Filterzelle, die mit einem Kommassenbett gefüllt ist und die über einen Zulauf und eine Zulaufleitung an ein Regenwasser-Sammelrohr anschließbar ist, wobei über der obersten Schichtung des Kornmassenbetts ein Freiraum in der Filterzelle ausgebildet ist, wobei der Zulauf in den Freiraum mündet, wobei die Filterzelle gereinigtes Regenwasser über eine Entnahmeleitung und einen Auslauf dem Regenwasser-Sammelbehälter zuführt, wobei der Filterzelle eine Pumpe zugeordnet ist, die mit der Entnahmeleitung der Filterzelle strömungsverbunden ist, und wobei im Falle einer Reinigung der Filterzelle Regenwasser von dem Freiraum der Filterzelle in den Zulauf gelangt, sieht die Erfindung vor,
■ dass die Filterzelle bis auf den Zulauf, eine Entlüftungsöffnung und den Auslauf geschlossen ausgebildet ist, wobei die Entlüftungsöffnung oberhalb der Filterzelle angeordnet ist,
■ dass die Pumpe zwischen der Entnahmeleitung und dem Auslauf angeordnet ist wobei in der Filterzelle gereinigtes Regenwasser durch die Entnahmeleitung und die Pumpe hindurch zum Auslauf gelangt, und wobei im Falle einer Reinigung der Filterzelle gereinigtes Regenwasser mittels der Pumpe von dem Auslauf, über die Pumpe, durch die Entnahmeleitung und in den Freiraum der Filterzelle gelangt, und
■ dass die der Filterzelle zugeordnete Pumpe so einstellbar ist, dass im Falle einer Reinigung der Filterzelle die Spülwassermenge so eingestellt ist, dass sich das Kornmassenbett in den Freiraum ausdehnt und fluidisiert, wobei das Kornmassenbett und die Spülwassermenge derart aufeinander abstimmbar sind, dass die Verunreinigungen weitestgehend ausgetragen werden und das Kornmassenbett nach dem Abschalten der Spülwasserpumpe geschichtet wieder absinkt.

Das gesammelte Regenwasser gelangt durch die Zulaufleitung hindurch in die Filterzelle und von dieser über die Entnahmeleitung in den Regenwasser-Sammelbehälter. Dabei wird das Wasser von Verunreinigungen befreit, die in der Filterzelle zurückgehalten werden. Soll diese gereinigt werden, wird das in dem Sammelbehälter gesammelte Wasser mittels der zugeordneten Pumpe (Spülwasserpumpe) durch die Entnahmeleitung hindurch unmittelbar in die Filterzelle zurück gepumpt. Letztere wird dadurch gespült; die Verunreinigungen werden durch die Zulaufleitung hindurch in den Kanal ausgetragen.

Der apparative Aufwand der erfindungsgemäßen Filtereinrichtung ist im Vergleich zu herkömmlichen Einrichtungen äußerst gering, denn aufwendige Ventilschaltungen oder separate Spülleitungen sind nicht mehr erforderlich. Ferner ist es möglich, die erfindungsgemäße Filtereinrichtung ohne großen Aufwand in bereits bestehenden Regenwasser-Sammelbehältern einzubauen oder nachzurüsten, weil der Leitungs- und Schaltungsaufwand auf ein Minimum reduziert ist. Die Anschaffungs- und Montagkosten sind entsprechend niedrig.

Konstruktiv ist es günstig, wenn die Pumpe über eine Leitung mit der Entnahmeleitung strömungsverbunden ist, wobei die Leitung und die Entnahmeleitung eine Spülleitung für die Filterzelle bilden. Die zusätzliche Leitung ermöglicht eine stets optimale Positionierung der Pumpe relativ zur Filterzelle und innerhalb des Sammelbehälters, wobei das in dem Behälter gesammelte Regenwasser unmittelbar zur Reinigung der Filterzelle verwendet werden kann. Jedes Filter muss regelmäßig von den zurückgehaltenen Schmutzstoffen befreit werden, um die Reinigungsleistung dauerhaft gewährleisten zu können. Zur Spülung der Filterzelle mit Filtrat aus dem Regenwasser-Sammelbehälter muss jedoch lediglich die zugeordnete Spülwasserpumpe eingeschaltet werden. Das Spülwasser strömt dann über die zusätzliche Leitung und die Entnahmeleitung direkt in die Filterzelle und von dieser aus gemeinsam mit den gelösten Verunreinigungen in den Abwasserkanal.

Eine Weiterbildung der Erfindung sieht vor, dass der Auslauf der Filterzelle von der Pumpe gebildet wird. Das in der Filterzelle gereinigte Wasser gelangt mithin durch die Entnahmeleitung und die Pumpe direkt in den Sammelbehälter und kann von dort über die Pumpe direkt zum Spülen der Filterzelle entnommen werden. Separate oder zusätzliche Spülleitungen, die über eine aufwendige Ventilsteuerung zu oder abgeschaltet werden müssen, sind nicht erforderlich.

Die Filterzelle ist bis auf den Zulauf, eine Entlüftungsöffnung und den Auslauf geschlossen ausgebildet ist. Dies verhindert ein Austreten des Kornmassen-Materials in den Sammelbehälter. Darüber hinaus ist gewährleistet, dass die Filterzelle unabhängig vom Füllstand des Sammelbehälters stets mit Wasser gefüllt ist und mithin nicht austrocknen kann. Auch beim Spülvorgang, bei dem sich das Filtermaterial in der Filterzelle ausdehnt und fluidisiert, kann kein Filtermaterial aus der Filterzelle austreten.

Bevorzugt ist die Entlüftungsöffnung in der Leitung zwischen der Pumpe und der Entnahmeleitung vorgesehen. Man kann die Entlüftungsöffnung aber auch an einer anderen geeigneten Stelle vorsehen. Wichtig ist, dass die Entlüftungsöffnung über der Filterzelle liegt.

Um den Spülvorgang zu automatisieren, sieht die Erfindung weiter vor, dass die Pumpe zur Spülung der Filterzelle mit einer Zeitschaltuhr gekoppelt ist. Dadurch kann die Filterspülung beispielsweise zyklisch erfolgen, beispielsweise wöchentlich oder täglich.

Eine weitere Ausführungsform der Erfindung sieht vor, dass die Zulaufleitung von dem unmittelbar in einen Kanalanschluss oder Sickerschacht mündenden Regenwasser-Sammelrohr abzweigt und zumindest abschnittsweise als Fallrohr ausgebildet ist, wobei die zwischen der Entnahmeleitung und der zugeordneten Pumpe vorgesehene Leitung der Filterzelle unterhalb des Abzweigs der Zulaufleitung von dem Regenwasser-Sammelrohr liegt.

Das gesammelte Regenwasser gelangt damit stets sicher und mit ausreichendem Druck in die Filterzelle und von dieser aus über die Entnahmeleitung, die zusätzliche Leitung und die Pumpe hindurch in den Regenwasser-Sammelbehälter, der vor Schmutzablagerungen weitestgehend verschont bleibt. Durch den geodätischen Unterschied zwischen Abzweig (Zulauf) des Fallrohrs und Auslauf der Filterzellen wird der für die Filtration erforderliche Druck zur Verfügung gestellt. Zusätzlicher Energieaufwand ist nicht erforderlich, was sich äußerst günstig auf Anschaffungs- und Betriebskosten auswirkt. Steigt der Wasserspiegel im Speicher, reduziert sich der Vordruck im Fallrohr entsprechend, d.h. die Filterzellen nehmen stets nur die maximal verarbeitbare Wassermenge auf. Überbelastungen des Filters sind damit zuverlässig ausgeschlossen. Ist die Aufnahmekapazität des Sammelbehälters erschöpft, staut sich das Wasser im Zulaufrohr zurück. Überschüssiges Regenwasser wird unmittelbar dem Kanal zugeführt. Externe oder interne Notüberläufe sind nicht erforderlich.

Besonders gute Reinigungsergebnisse erzielt man, wenn die Filterzellen mit einem Kornmassenbett gefüllt sind. Ein solches Filterbett hat eine außerordentlich gute Filterwirkung. Es hält nicht nur kleinste Schweb- bzw. Feststoffe zurück, sondern baut zusätzlich im Wasser gelöste Verunreinigungen ab. Dieser Effekt lässt sich weiter verbessern, indem das Kornmassenbett getrennte Schichtungen aus verschiedenen Materialien mit unterschiedlicher Körnung und/oder Dichte aufweist. Je nach Größe der Filterzellen lässt sich die Reinigungswirkung optimal einstellen.

Um die Filterzelle stets optimal reinigen zu können, ist oberhalb der obersten Schicht des Kornmassenbetts ein Freiraum ausgebildet, der eine Ausdehnung des Kornmassenbetts während des Spülvorgangs ermöglicht. Das Kornmassenbett und die Spülwassermenge sind dabei derart aufeinander abgestimmt, dass die Schmutzpartikel weitestgehend ausgetragen werden und das Kornmassenbett nach dem Abschalten der Spülwasserpumpe stets sauber und einwandfrei geschichtet wieder absinkt.

Die Spülwassermenge ist über die der Filterzelle zugeordnete Pumpe einstellbar, so dass sich die Kornmassenbetten in den Freiraum ausdehnen und innerhalb der Filterzelle fluidisieren. Während der Fluidisierung werden Schmutzpartikel aus dem Kornmassenbett gelöst und durch den Zulauf und die Zulaufleitung hindurch in den Kanal ausgetragen. Nach etwa 2 bis 5 Minuten sind alle Schmutzstoffe weitestgehend ausgetragen und die zugeordnete Spülwasserpumpe kann wieder abgeschaltet werden. Das Kornmassenbett sinkt in seine Ausgangsstellung zurück, wobei sich die Materialien unterschiedlicher Körnung automatisch in ihren Schichten ordnen.

Zweckmäßig ist das Entnahmerohr der Filterzelle ein Steigrohr, das über dem Boden der Filterzelle beginnt und in die Leitung zur Spülpumpe mündet.

Eine wichtige Weiterbildung der Erfindung sieht vor, dass die Filterzelle, die Pumpe, die Leitung und die Entnahmeleitung eine vormontierte Baueinheit bilden. Dies wirkt sich nicht nur günstig auf die Anschaffungskosten aus. Ferner reduziert sich der Montageaufwand sowohl in Neu- wie auch in Altanlagen auf ein Minimum, so dass es ohne großen Aufwand möglich ist, reparaturbedürftige Filteranlagen instand zu setzen oder ein veraltetes System auf einen neuen Stand der Technik zu bringen.

Die Reinigung der Filterzellen erfolgt auf überraschend einfache Weise über die Spülwasserpumpe und die daran angeschlossene Verbindungsleitung bzw. Entnahmeleitung, die gemeinsam eine Spülleitung bilden. Das Spülwasser wird direkt aus dem Sammelbehälter entnommen und durch die Filterzelle gedrückt. Anschließend gelangt das ungereinigte Regenwasser durch die Filterzelle, die Spülleitung und die Pumpe hindurch gereinigt in den Sammelbehälter. Sowohl die Reinigung des Regenwassers als auch die Reinigung der Filterzelle erfolgt mithin über eine einzelne kompakte Einbaueinheit, die kostengünstig aufgebaut und rasch montiert werden kann.

Gemäß einer weiteren Ausgestaltung der Erfindung sind mehrere Filterzellen einer Spülwasserpumpe zugeordnet, die über eine Leitung mit den jeweils zugehörigen Entnahmeleitungen der Filterzellen strömungsverbunden ist, wobei die Filterzellen an ein gemeinsames Zulaufrohr kommunizierend angeschlossen sind. Die Kapazität der Regenwasser-Filteranlage lässt sich damit entsprechend den jeweiligen Anforderungen auch nachträglich rasch und problemlos erweitern, wobei die angeschlossenen Filter stets gleichmäßig belastet werden.

Eine weitere unabhängige Lösung sieht einen Regenwasser-Sammelbehälter vor, der mit einer zuvor geschilderten Filtereinrichtung ausgestattet ist. In dem Sammelbehälter ist eine Entnahmepumpe vorgesehen, mit der das gereinigte und gesammelte Regenwasser entnommen werden kann. Dazu ist an die Pumpe eine Entnahmeleitung angeschlossen, die das Regenwasser einem Brauchwassernetz zuführt. Dadurch kann das Regenwasser im häuslichen Bereich beispielsweise für die Gartenbewässerung verwendet werden.

Man erkennt, dass innerhalb des Regenwasser-Sammelbehälters eine erste Pumpe vorgesehen ist, mit der das gesammelte Regenwasser aus dem Sammelbehälter entnommen und einer Brauchwasserleitung zugeführt werden kann. Eine zweite Pumpe ist unabhängig von der ersten Pumpe ausgebildet und allein dem erfindungsgemäßen Filterelement zugeordnet. Diese zweite Pumpe dient dazu, die dem Filterelement zugeordneten Filterzellen in regelmäßigen Abständen zu spülen, wobei das Spülwasser unmittelbar dem Sammelbehälter entnommen wird.

Von Vorteil hierbei ist, dass eine nachträgliche Installation des Filterelements problemlos möglich ist, weil in das bereits installierte Entnahmesystem des Sammelbehälters nicht eingegriffen wird. Das vorzugsweise als vormontierte Baueinheit ausgebildete Filterelement muss lediglich an den Zulauf des Sammelbehälters angeschlossen werden. Weitere Installationsarbeiten sind nicht erforderlich. Sobald die dem Filterelement zugeordnete Pumpe an das ohnehin bereits vorhandene Stromnetz angeschlossen ist, kann der Sammelbehälter wieder wie gewohnt eingesetzt werden.

Die Filterzellen des Filterelements können - je nach Ausführungsform der Anlage bzw. abhängig von den örtlichen Gegebenheiten - innerhalb oder außerhalb des Regenwasser-Sammelbehälters angeordnet sein, was die Nachrüstung bzw. den Austausch bestehender Regenwasserspeicher weiter vereinfacht. Auch die beiden Pumpen, namentlich die Entnahmepumpe und die Spülwasserpumpe, können je nach Bedarf innerhalb oder außerhalb des Regenwasser-Sammelbehälters angeordnet sein.

Wichtig ist stets, dass die Filterzelle selbst aufgrund ihrer Ausbildung und Einbindung in das Leitungsnetz stets mit Wasser gefüllt ist und auch bei länger anhaltender Trockenzeit nicht trockenfallen kann, was meist zu schwer lösbaren Verkrustungen des Kornmassenbetts führt. Dazu ist vorgesehen, dass an dem Regenwasser-Sammelbehälter eine Trinkwassernachspeisung vorgesehen ist. Diese gewährleistet, dass der Behälter stets mit Wasser gefüllt ist bzw. bei Regenwassermangel mit Trinkwasser nachgespeist wird.

Darüber hinaus kann es zweckmäßig sein, wenn die Entnahmeleitung an ein Trinkwassernetz anschließbar ist. Dadurch ist ein Spülbetrieb auch bei vollständig entleerter oder fehlender Zisterne möglich.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:

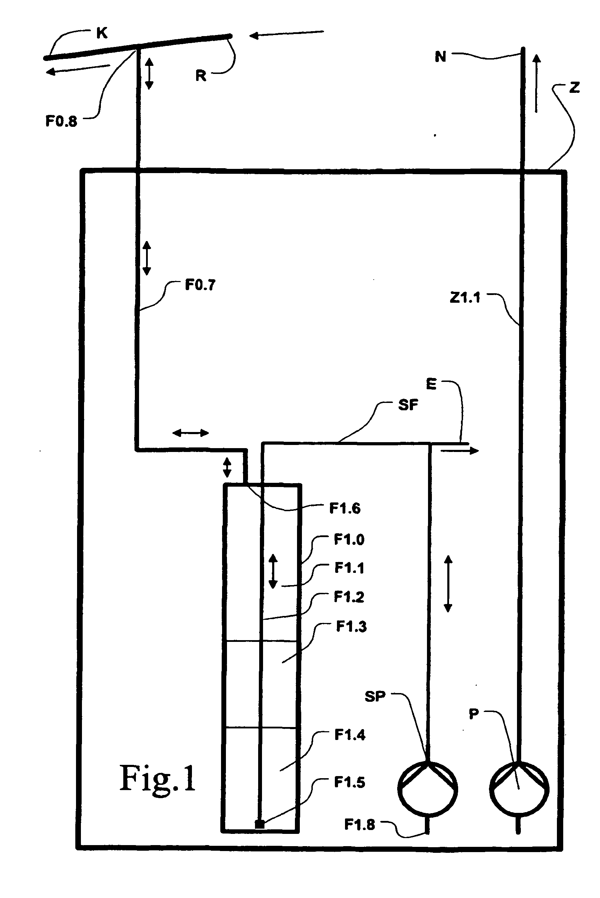

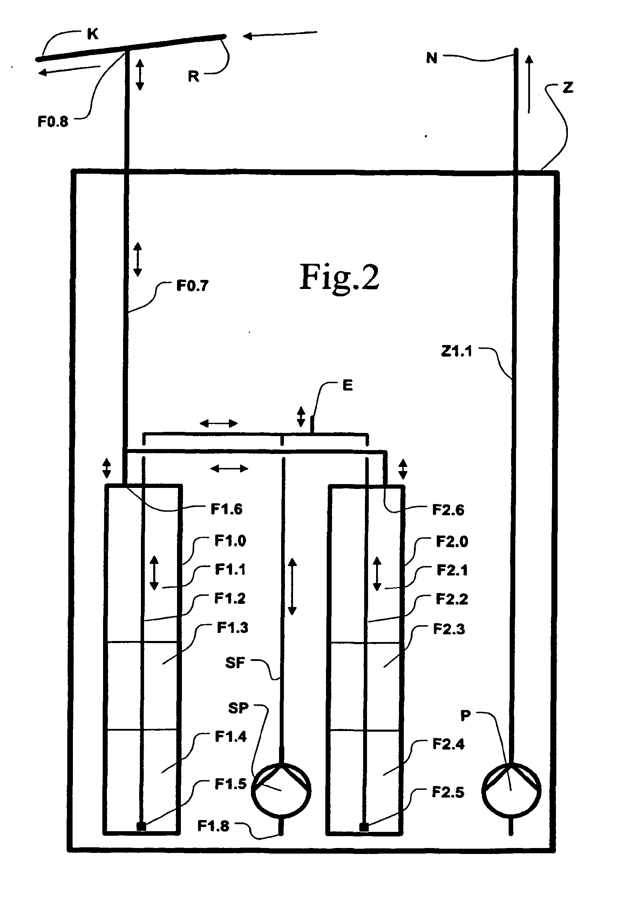

- Fig. 1: eine schematische Darstellung einer Regenwasser-Filteranlage mit einem Regenwasser-Sammelbehälter und einem Filterelement, und Fig. 2 eine schematische Darstellung einer anderen Ausführungsform einer Regenwasser-Filteranlage mit einem Regenwasser-Sammelbehälter und einem Filterelement.

Die in Fig. 1 dargestellte Filtereinrichtung F für einen Regenwasser-Sammelbehälter Z besitzt eine Filterzelle F1.0, die an ein abschnittsweise senkrecht nach unten abfallendes Zulaufrohr F0.7 angeschlossen ist. Letzteres zweigt in einem Abzweig F0.8 von einem unmittelbar in einen Kanalanschluss K oder einen (nicht dargestellten) Sickerschacht mündendes Regenwasser-Sammelrohr R ab und führt das von einer (nicht dargestellten) Dachfläche kommende, verschmutzte Regenwasser der Filterzelle F1.0 zu.

Fig. 1 zeigt, dass die Filterzelle F1.0 innerhalb der Zisterne Z angeordnet ist und dass der Auslauf F1.8 der Filterzelle F1.0 von der Pumpe SP gebildet wird, die über eine Ablaufleitung SF mit der Entnahmeleitung F1.2 verbunden ist. Der Abzweig F0.8 des Fallrohrs F0.7 liegt unterhalb des Auslaufs F1.8 der Filterzelle F1.0.

Neben dem Zulauf F0.7 besitzt die Filterzelle F1.0 einen Ablauf SF, über den das filtrierte Wasser die Filterzelle F1.0 in freiem Auslauf durch die Spülwasserpumpe SP und dem Auslauf F1.8 in einen Regenwasserspeicher Z, beispielsweise eine Zisterne oder einen Kunststofftank mündet.

Im Ablauf SP die gleichzeitig auch die Spülwasserleitung ist, befindet sich eine Be- bzw. Entlüftungsöffnung E. Diese Öffnung E verhindert das Leerhebern der Filtereinrichtung F

Die Filterzelle F1.0 ist bis auf den Zulauf F1.6 für das Zulaufrohr F0.7, der sich im Ablauf SF befindenden Öffnung E und dem Auslauf F1.8 rundum geschlossen ausgeführt.

Um das Regenwasser von den mitgeführten Verunreinigungen zu befreien, befindet sich in der Filterzelle F1.0 ein Kornmassenbett F1.3, F1.4. Dieses weist je nach gewünschtem Reinheitsgrad - bevorzugt getrennt - Schichtungen auf, die aus verschiedenen Materialien mit verschiedenen Körnungen bestehen können. Beispielsweise kann für die untere Schichtung F1.4 feinkörniger Sand oder Kies verwendet werden, während in der oberen Schicht F1.3 Anthrazit oder Bims aufgeschüttet wird. Ein Freiraum F1.1 über der oberen Kornmassenschicht F1.3 dient als Trennzone bzw. Überstauraum für eine später noch näher erläuterte Filterspülung.

Am Boden der Filterzelle F1.0 strömt das von der Kornmassenschichtung F1.3, F1.4 filtrierte Wasser in ein Entnahmerohr F1.2, das als Steigrohr ausgebildet ist. Es durchläuft das Kornmassenbett F1.3, F1.4 senkrecht nach oben und endet in dem Auslauf F1.8. Das Filtrat verlässt somit die Filterzelle F1.0 durch das Filtratrohr F1.2 und die Leitung SF hindurch über die Spülwasserpumpe SP in die Zisterne Z. Damit das Material der unteren Filterschicht F1.4 nicht aus der Filterzelle F1.0 heraus in die Zisterne Z gelangt, ist auf das untere Ende des Steigrohres F1.2 eine Filterdüse F1.5 aufgesetzt.

Man erkennt in Fig. 1, dass das Regenwasser-Sammelrohr R für das zulaufende Rohwasser mit Gefälle in den Abwasserkanal K oder den Sickerschacht verlegt ist. Von dem Sammelrohr R aus, zweigt der Zulauf F0.7 für die Filterzelle F1.0 ab. Der geodätische Unterschied zwischen dem Abzweig F0.8 der Zulaufleitung F0.7 und der Filterzelle F1.0 zugeordneter Leitung SF stellt den für die Filtration erforderlichen Druck zur Verfügung. Liegt der (nicht gezeigte) Wasserspiegel in dem Regenwasser-Sammelbehälter Z über der Leitung SF der Filterzelle F1.0, reduziert sich der verfügbare Vordruck entsprechend. Übersteigt der Rohwasserzulauf durch die Rohrleitung R die Kapazität der Filteranlage, steigt der Wasserspiegel im Zulaufrohr F0.7 entsprechend an und das überschüssige Regenwasser fließt direkt in den Kanal K ab, ohne in die Zisterne Z zu gelangen.

Das durch die Rohrleitung R ankommende Dachwasser fließt nach unten abzweigend über das Fallrohr F0.7 und den Zulauf F1.7 in den Stauraum F1.1 der Filterzelle F1.0. Von dort aus wird das Regenwasser durch das Kornmassenbett F1.3, F1.4 gedrückt. Während dieser Passage befreien die einzelnen Schichten F1.3 bzw. F1.4 das Wasser von mitgeführten Feststoffen und/oder Schwebeteilchen. Neben der Feststoffrückhaltung laufen gleichzeitig biologische Abbauvorgänge ab, die auch einen großen Teil der im Regenwasser gelösten organischen Verunreinigungen entfernen. Am unteren Ende der unteren Kornmassenschicht F1.4 strömt das nunmehr gereinigte Wasser durch die Filterdüse F1.5 über das Filtratrohr F1.2, die Ablaufleitung SF und den über die Spülwasserpumpe SP gebildeten Ablauf F1.8 in die Zisterne Z.

Eine Pumpe P fördert das in der Zisterne Z gesammelte Regenwasser über die Leitung Z1.1 in ein Brauchwassernetz N, welches daran angeschlossene Verbraucher mit gereinigtem Wasser versorgt.

Um die Reinigungsleistung der Filterzelle F1.0 dauerhaft zu gewährleisten, muss das Kornmassenbett F1.3, F1.4 in regelmäßigen Abständen von den zurückgehaltenen Schmutzstoffen befreit werden. Zu diesem Zweck werden die Kornmassen-Schichtungen F1.3, F1.4 innerhalb der Filterzelle F1.0 mit dem in der Zisterne Z gespeichertem Filtrat durchspült.

Hierzu kommt nun die bisher den Auslauf F1.8 bildende Spülwasserpumpe SP zum Einsatz. Zur Spülung der Filterzelle F1.0 bzw. des Kornmassenbetts F1.3, F1.4 wird die bevorzugt zyklisch von einer Zeitschaltuhr gesteuerte Pumpe SP eingeschaltet. Die Pumpe SP wird vorzugsweise wöchentlich eingeschaltet, wodurch eine einwandfreie, vollautomatische Spülung der Anlage gewährleistet ist.

Das der Zisterne Z entnommene Spülwasser strömt durch die Ablauf- bzw. Spülwasserleitung SF in das Filtratrohr F1.2. Aus der Filterdüse F1.5 strömt das Spülwasser durch das Kornmassenbett F1.3, F1.4 von unten nach oben durch den Überstauraum F1.1 hindurch in den Zulauf F1.6 hinein und von dort über das Zulaufrohr F0.7 direkt in den Kanal K.

Die Spülwassermenge ist so eingestellt, dass sich das Kornmassenbett F1.3, F1.4 der Filterzelle F1.0 in den Überstauraum F1.2 ausdehnt und fluidisiert. Während der Fluidisierung werden an dem Filtermaterial haftende Schmutzpartikel gelöst und in den Kanal K ausgetragen. Nach einigen Minuten, z.B. 2-5 Minuten sind die Schmutzstoffe ausgetragen und die Spülwasserpumpe SP schaltet sich wieder ab.

Das Kornmassenbett F1.3, F1.4 und die Spülwassermenge sind derart aufeinander abgestimmt, dass die Schmutzpartikel weitgehend ausgetragen werden und das Kornmassenbett F1.3, F1.4 sauber und einwandfrei geschichtet nach dem Abschalten der Spülwasserpumpe P zurückbleibt.

Eine weitere Ausführungsform der Erfindung ist in Fig. 2 dargestellt. Hierbei sind mehrere Filterzellen F1.0, F2.0 über die Verbindungsleitung SF mit den zugehörigen Entnahmeleitungen F1.2, F2.2 der Filterzellen F1.0, F2.0 an ein gemeinsames Zulaufrohr F0.7 angeschlossen, wobei der der freie Auslauf weiterhin über eine einzelne Pumpe P und dem angeschlossenen Auslauf F1.8 gebildet wird.

Die Filterzellen F1.0, F2.0 sind über das Zuführ- und Verbindungsrohr SF kommunizierend miteinander verbunden. Das Dachwasser teilt sich umgekehrt proportional zu den Druckverlusten der einzelnen Filterzellen F1.0, F2.0 auf und strömt über die Zulauföffnungen F1.6, F2.6 in die Überstauräume F1.2 bzw. F2.1

Von dort aus gelangt das Regenwasser in die Kornmassenbetten F1.3, F1.4 bzw. F2.3, F2.4 der Filterzellen F1.0, F2.0, durchströmt diese und wird von mitgeführten Feststoffen und/oder Schwebeteilchen befreit. Neben der Feststoffrückhaltung laufen gleichzeitig biologische Abbauvorgänge ab, die auch einen großen Teil der gelösten organischen Verunreinigungen aus dem Wasser entfernen. Am Ende jeder Kornmassenschicht F1.4, F2.4 strömt das nunmehr gereinigte Wasser durch die Filterdüsen F1.5, F2.5 über die Filtratrohre F1.2, F2.2, die Leitung SF, die Pumpe SP und den Auslauf F1.8 in die Zisterne Z.

Die Filterzellen F1.0, F2.0 werden, wie bei nur einer oder noch mehr eingebauten Filterzellen, in regelmäßigen Abständen zyklisch durchspült. Der Spülvorgang läuft hier ebenso wie zu Fig.1 beschrieben ab. Zunächst schaltet sich die Spülwasserpumpe SP ein und pumpt das der Zisterne Z entnommene Spülwasser über die Ablauf- bzw. Spülwasserleitung SF in die Filtratrohre F1.2, F2.2. Aus den Filterdüsen F1.5, F2.5 strömt das Spülwasser durch die Kornmassenbetten F1.3, F1.4 bzw. F2.3, F2.4 von unten nach oben durch die jeweiligen Überstauraum F1.1, F2.1 hindurch in die miteinander verbundenen Zuläufe F1.6, F2.6 hinein und von dort über das Zulaufrohr F0.7 direkt in den Kanal K.

Auch bei mehreren eingesetzten Filterzellen F1.0, F2.0 ist die Spülwassermenge so eingestellt, dass sich die Kornmassenbetten F1.3, F1.4 bzw. F2.3, F2.4 der Filterzellen F1.0, F2.0 in die Überstauräume F1.2, F2.2 ausdehnen und diese fluidisieren. Während der Fluidisierung werden an dem Filtermaterial haftende Schmutzpartikel gelöst und in den Kanal K ausgetragen. Nach wenigen Minuten sind die Schmutzstoffe ausgetragen und die Spülwasserpumpe SP schaltet sich wieder ab.

Nach der Spülung bleiben saubere und einwandfrei geschichtete Kornmassenbetten F1.3, F1.4 bzw. F2.3, F2.4 zurück.

Ein wichtiger Vorteil der Filtereinrichtung besteht zudem darin, dass die Filterzellen F1.0 und F2.0 in Phasen ohne Regenwasserzulauf nicht austrocknen können, sondern stets konstruktionsbedingt im Wasser stehen. Eingetrocknete Schmutzstoffe oder Lufteinschlüsse innerhalb der Zellen F1.0, F2.0, die eine Filterblockierung hervorrufen könnten, können somit gar nicht entstehen.

Um die Funktion der Brauchwasseranlage auch bei länger anhaltenden Trockenzeiten nutzbar zu halten, kann man die Anlage mit einer Trinkwasser-Nachspeisung versehen.

Die Erfindung ist nicht auf eine der vorbeschriebenen Ausführungsformen beschränkt, sondern in vielfältiger Weise abwandelbar. So können die Filterzellen F1.0, F2.0 auch außerhalb der Zisterne Z angeordnet werden oder gruppenweise an separaten Zulaufrohren F0.7 angeschlossen sein. Ebenso kann man die Pumpe P und die Spülwasserpumpe SP außerhalb der Zisterne Z trocken aufstellen.

Je nach erforderlicher Reinigungskapazität lassen sich beliebig viele Filterzellen F1.0, F2.0 problemlos parallel nebeneinander betreiben. Wichtig ist nur, dass die Filterzellen miteinander kommunizierend an der ersten Filterzelle F1.0 verbunden sind.

Man erkennt, dass eine Filtereinrichtung F für einen Regenwasser-Sammelbehälter Z zur Verbesserung der Filter- und Wartungseigenschaften über einen Zulauf F1.6 und eine

Zulaufleitung F0.7 an ein Regenwasser-Sammelrohr R angeschlossen ist und die mittels eines Kornmassenfilters F1.3, F1.4 gereinigtes Regenwasser über eine Entnahmeleitung F1.2 und einen Auslauf F1.8 dem Regenwasser-Sammelbehälter Z zuführt, wobei der Filterzelle F1.0 eine Pumpe P zugeordnet ist, die mit der Entnahmeleitung F1.2 der Filterzelle F1.0 verbunden ist. Der Ablauf F1.8 wird über die Spülwasserpumpe SP gebildet. Eine Pumpe P speist das in der Zisterne Z gespeicherte Regenwasser in ein Brauchwassernetz N. Mehrere Filterzellen F1.0, F2.0 können über die Leitung SF an ein gemeinsames Zulaufrohr F0.7 kommunizierend angeschlossen sein. Die Spülung der Filterzellen F1.0, F2.0 erfolgt in umgekehrter Richtung zur Filtration. Durch die sich zyklisch einschaltende Spülwasserpumpe SP strömt Brauchwasser aus der Zisterne über die Ablauf- bzw. Spülwasserleitung SF in die Filtratrohre F1.2, F2.2. Aus den Filterdüsen F1.5, F2.5 strömt das Spülwasser durch die Kornmassenbetten F1.3, F1.4 bzw. F2.3, F2.4 von unten nach oben durch die jeweiligen Überstauraum F1.1, F2.1 hindurch in die miteinander verbundenen Zuläufe F1.6, F2.6 hinein und von dort über das Zulaufrohr F0.7 direkt in den Kanal K.

Insbesondere betrifft die Erfindung ein Verfahren mit Filtereinrichtung für einen Regenwasser-Sammelbehälter, mit wenigstens einer Filterzelle, die über einen Zulauf und eine Zulaufleitung an ein Regenwasser-Sammelrohr anschließbar ist und die gereinigtes Regenwasser über eine Entnahmeleitung und einen Auslauf dem Regenwasser-Sammelbehälter zuführt. Dadurch entsteht eine Filtereinrichtung für einen Regenwasser-Sammelbehälter, die mit einfachen Mitteln kostengünstig aufgebaut ist und ein Nachrüsten von Altanlagen bzw. das Austauschen eines alten Filtersystems einfach und ohne großen Aufwand ermöglicht. Der Filterzelle ist einer Pumpe zugeordnet, die mit der Entnahmeleitung der Filterzelle strömungsverbunden ist.

## Patentansprüche

1. Filtereinrichtung (F) für einen Regenwasser-Sammelbehälter (Z),
a) mit wenigstens einer Filterzelle (F1.0), die mit einem Kornmassenbett (F1.3, F1.4) gefüllt ist und die über einen Zulauf (F1.6) und eine Zulaufleitung (F0.7) an ein Regenwasser-Sammelrohr (R) anschließbar ist,
b) wobei über der obersten Schichtung (F1.3) des Kornmassenbetts (F1.3, F1.4) ein Freiraum (F1.1) in der Filterzelle (F1.0) ausgebildet ist,
c) wobei der Zulauf (F1.6) in den Freiraum (F1.1) mündet,
d) wobei die Filterzelle (F1.0) gereinigtes Regenwasser über eine Entnahmeleitung (F1.2) und einen Auslauf (F1.8) dem Regenwasser-Sammelbehälter (Z) zuführt,
e) wobei der Filterzelle (F1.0) eine Pumpe (SP) zugeordnet ist, die mit der Entnahmeleitung (F1.2) der Filterzelle (F1.0) strömungsverbunden ist, und
f) wobei im Falle einer Reinigung der Filterzelle (F1.0) Regenwasser von dem Freiraum (F1.1) der Filterzelle (F1.0) in den Zulauf (F1.6) gelangt,
**dadurch gekennzeichnet,**
g) **dass** die Filterzelle (F1.0) bis auf den Zulauf (F1.6), eine Entlüftungsöffnung (E) und den Auslauf (F1.8) geschlossen ausgebildet ist,
h) wobei die Entlüftungsöffnung (E) oberhalb der Filterzelle (F1.0) angeordnet ist,
i) **dass** die Pumpe (SP) zwischen der Entnahmeleitung (F1.2) und dem Auslauf (F1.8) angeordnet ist,
j) wobei in der Filterzelle (F1.0) gereinigtes Regenwasser durch die Entnahmeleitung (F1.2) und die Pumpe (SP) hindurch zum Auslauf (F1.8) gelangt, und
k) wobei im Falle einer Reinigung der Filterzelle (F1.0) gereinigtes Regenwasser mittels der Pumpe (SP) von dem Auslauf (F1.8), über die Pumpe (SP), durch die Entnahmeleitung (F1.2) und in den Freiraum (F1.1) der Filterzelle (F1.0) gelangt, und
l) **dass** die der Filterzelle (F1.0) zugeordnete Pumpe (SP) so einstellbar ist, dass im Falle einer Reinigung der Filterzelle (F1.0) die Spülwassermenge so eingestellt ist, dass sich das Kornmassenbett (F1.3, F1.4) in den Freiraum (F1.1) ausdehnt und fluidisiert,
m) wobei das Kornmassenbett (F1.3, F1.4) und die Spülwassermenge derart aufeinander abstimmbar sind, dass die Verunreinigungen weitestgehend ausgetragen werden und das Kornmassenbett (F1.3, F1.4) nach dem Abschalten der Spülwasserpumpe (SP) geschichtet wieder absinkt.

2. Filtereinrichtung nach Anspruch 1, **dadurch gekennzeichnet, dass** der Auslauf (F1.8) der Filterzelle (F1.0) von der Pumpe (SP) gebildet ist.

3. Filtereinrichtung nach einem der Ansprüche 1 oder 2, **dadurch gekennzeichnet, dass** die Zulaufleitung (F0.7) von dem unmittelbar in einen Kanalanschluss (K) oder Sickerschacht mündenden Regenwasser-Sammelrohr (R) abzweigt und zumindest abschnittsweise als Fallrohr ausgebildet ist.

4. Filtereinrichtung nach einem der Ansprüche 1 bis 3, **dadurch gekennzeichnet, dass** die Pumpe (SP) über eine Leitung (SF) mit der Entnahmeleitung (F1.2) strömungsverbunden ist, wobei die Leitung (SF) und die Entnahmeleitung (F1.2) eine Spülleitung für die Filterzelle (F1.0) bilden.

5. Filtereinrichtung nach Anspruch 4, **dadurch gekennzeichnet, dass** die Leitung (SF) der Filterzelle (F1.0) unterhalb eines Abzweigs (F0.8) der Zulaufleitung (F0.7) von dem Regenwasser-Sammelrohr (R) liegt.

6. Filtereinrichtung nach Anspruch 4, **dadurch gekennzeichnet, dass** die Entnahmeleitung (F1.2) der Filterzelle (F1.0) ein Steigrohr ist, das über dem Boden der Filterzelle (F1.0) beginnt und in die Leitung (SF) mündet.

7. Filtereinrichtung nach einem der Ansprüche 4 oder 6, **dadurch gekennzeichnet, dass** die Filterzelle (F1.0), die Pumpe (SP), die Leitung (SF) und die Entnahmeleitung (F1.2) eine vormontierte Baueinheit bilden.

8. Filtereinrichtung nach einem der Ansprüche 4, 6 oder 7, **dadurch gekennzeichnet, dass** mehrere Filterzellen (F1.0, F2.0) einer Pumpe (SP) zugeordnet sind, die über die Leitung (SF) mit den jeweils zugehörigen Entnahmeleitungen (F1.2, F2.2) der Filterzellen (F1.0, F2.0) strömungsverbunden ist, wobei die Filterzellen (F1.0, F2.0) an ein gemeinsames Zulaufrohr (F0.7) kommunizierend angeschlossen sind.

9. Regenwasser-Sammelbehälter (Z) mit einer Filtereinrichtung (F) gemäß einem der Ansprüche 1 bis 8.

10. Regenwasser-Sammelbehälter (Z) nach Anspruch 9, **dadurch gekennzeichnet, dass** das Regenwasser über eine Pumpe (P) und eine Entnahmeleitung (Z1.1) aus dem Regenwasser-Sammelbehälter (Z) entnehmbar und einem Brauchwassernetz (N) zuführbar ist.

## Claims

1. Filter device (F) for a rainwater collection tank (Z),
a) comprising at least one filter cell (F1.0) which is filled with a grain mass bed (F1.3, F1.4) and can be connected to a rainwater collection tube (R) via an inlet (F1.6) and an inlet conduit (F0.7),
b) a clearance (F1.1) being formed in the filter cell (F1.0) above the uppermost layer (F1.3) of the grain mass bed (F1.3, F1.4),
c) the inlet (F1.6) opening into the clearance (F1.1),
d) the filter cell (F1.0) feeding cleaned rainwater to the rainwater collection tank (Z) via a removal conduit (F1.2) and an outlet (F1.8),
e) a pump (SP) being associated with the filter cell (F1.0), which pump is connected in terms of flow to the removal conduit (F1.2) of the filter cell (F1.0), and
f) rainwater from the clearance (F1.1) of the filter cell (F1.0) reaching the inlet (F1.6) when the filter cell (F1.0) is cleaned,
**characterised in that**
g) the filter cell (F1.0) is formed closed apart from the inlet (F1.6), a ventilation opening (E) and the outlet (F1.8),
h) the ventilation opening (E) being arranged above the filter cell (F1.0),
i) **in that** the pump (SP) is arranged between the removal conduit (F1.2) and the outlet (F1.8),
j) rainwater cleaned in the filter cell (F1.0) arriving at the outlet (F1.8) through the removal conduit (F1.2) and the pump (SP), and
k) cleaned rainwater arriving, by means of the pump (SP), from the outlet (F1.8), via the pump (SP), through the removal conduit (F1.2) and into the clearance (F1.1) of the filter cell (F1.0) when the filter cell (F1.0) is cleaned, and
l) **in that** the pump (SP) associated with the filter cell (F1.0) can be adjusted such that, when the filter cell (F1.0) is cleaned, the volume of rinse water is adjusted such that the grain mass bed (F1.3, F1.4) expands into the clearance (F1.1) and fluidises,
m) it being possible to match the grain mass bed (F1.3, F1.4) and the volume of rinse water to one another in such a way that the impurities are extracted to the greatest possible extent and the grain mass bed (F1.3, F1.4) sinks back into layers once the rinsing water pump (SP) has been switched off.

2. Filter device according to claim 1, **characterised in that** the outlet (F1.8) of the filter cell (F1.0) is formed by the pump (SP).

3. Filter device according to either claim 1 or claim 2, **characterised in that** the inlet conduit (F0.7) branches off from the rainwater collection rube (R), which opens directly into a duct connection (K) or a seepage shaft, and is formed as a downpipe at least in portions.

4. Filter device according to any of claims 1 to 3, **characterised in that** the pump (SP) is connected in terms of flow to the removal conduit (F1.2) via a conduit (SF), the conduit (SF) and the removal conduit (F1.2) forming a rinsing conduit for the filter cell (F1.0).

5. Filter device according to claim 4, **characterised in that** the conduit (SF) of the filter cell (F1.0) is located below a branch (F0.8) of the inlet conduit (F0.7) from the rainwater collection tube (R).

6. Filter device according to claim 4, **characterised in that** the removal conduit (F1.2) of the filter cell (F1.0) is a riser which starts above the bottom of the filter cell (F1.0) and opens into the conduit (SF).

7. Filter device according to either claim 4 or claim 6, **characterised in that** the filter cell (F1.0), the pump (SP), the conduit (SF) and the removal conduit (F1.2) form a preassembled module.

8. Filter device according to any of claims 4, 6 or 7, **characterised in that** a plurality of filter cells (F1.0, F2.0) are associated with one pump (SP), which is connected in terms of flow to the respectively associated removal conduits (F1.2, F2.2) of the filter cells (F1.0, F2.0)) via the conduit (SF), the filter cells (F1.0, F2.0) being in communication with a common inlet tube (F0.7).

9. Rainwater collection tank (Z) comprising a filter device (F) according to any of claims 1 to 8.

10. Rainwater collection tank (Z) according to claim 9, **characterised in that** the rainwater can be removed from the rainwater collection tank (Z) via a pump (P) and a removal conduit (Z1.1) and can be fed to a service water network (N).

## Revendications

1. Dispositif de filtrage (F) pour un réservoir collecteur d'eau de pluie (Z),
a) avec au moins une cellule filtrante (F1.0) qui est remplie d'un lit de masse de grains (F1.3, F1.4) et qui peut être raccordée à un tuyau collecteur d'eau de pluie (R) par le biais d'une amenée (F1.6) et d'une conduite d'amenée (F0.7),
b) un espace libre (F1.1) étant constitué dans la cellule filtrante (F1.0) au-dessus de la stratification la plus haute (F1.3) du lit de masse de grains (F1.3, F1.4),
c) l'amenée (F1.6) débouchant dans l'espace libre (F1.1),
d) la cellule filtrante (F1.0) conduisant l'eau de pluie nettoyée au réservoir collecteur d'eau de pluie (Z) par le biais d'une conduite de prélèvement (F1.2) et d'une sortie (F1.8),
e) une pompe (SP) étant affectée à la cellule filtrante (F1.0) et étant raccordée en écoulement à la conduite de prélèvement (F1.2) de la cellule filtrante (F1.0), et
f) l'eau de pluie parvenant à l'amenée (F1.6) à partir de l'espace libre (F1.1) de la cellule filtrante (F1.0) en cas de nettoyage de la cellule filtrante (F1.0), **caractérisé en ce que**
g) la cellule filtrante (F1.0) est réalisée de de manière à être fermée jusqu'à l'amenée (F1.6), une ouverture d'évacuation d'air (E) et la sortie (F1.8),
h) l'ouverture d'évacuation d'air (E) étant disposée au-dessus de la cellule filtrante (F1.0),
i) **en ce que** la pompe (SP) est disposée entre la conduite de prélèvement (F1.2) et la sortie (F1.8),
j) l'eau de pluie nettoyée dans la cellule filtrante (F1.0) parvenant à la sortie (F1.8) en traversant la conduite de prélèvement (F1.2) et la pompe (SP), et
k) en cas de nettoyage de la cellule filtrante (F1.0), l'eau de pluie nettoyée étant conduite, au moyen de la pompe (SP), à partir de la sortie (F1.8), via la pompe (SP), à travers la conduite de prélèvement (F1.2) et dans l'espace libre (F1.1) de la cellule filtrante (F1.0), et
l) **en ce que** la pompe (SP) affectée à la cellule filtrante (F1.0) est réglable de telle sorte que, en cas de nettoyage de la cellule filtrante (F1.0), la quantité d'eau de rinçage est réglée de telle sorte que le lit de masse de grains (F1.3, F1.4) est dilaté dans l'espace libre (F1.1) et fluidisé,
m) le lit de masse de grains (F1.3, F1.4) et la quantité d'eau de rinçage pouvant être harmonisés entre eux de telle sorte que les impuretés sont évacuées le plus largement possible et après la mise hors circuit de la pompe d'eau de rinçage (SP), le lit de masse de grains (F1.3, F1.4) redescend par couches.

2. Dispositif de filtrage selon la revendication 1, **caractérisé en ce que** la sortie (F1.8) de la cellule filtrante (F1.0) est formée par la pompe (SP).

3. Dispositif de filtrage selon une des revendications 1 ou 2, **caractérisé en ce que** la conduite d'amenée (F0.7) bifurque à partir du tuyau collecteur d'eau de pluie (R) qui débouche directement dans un raccordement de canalisation (K) ou dans un puits drainant et est constituée en tant que tuyau de descente au moins par tronçons.

4. Dispositif de filtrage selon une des revendications 1 à 3, **caractérisé en ce que** la pompe (SP) est, par le biais d'une conduite (SF), raccordée en écoulement à la conduite de prélèvement (F1.2), la conduite (SF) et la conduite de prélèvement (F1.2) formant une conduite de rinçage pour la cellule filtrante (F1.0).

5. Dispositif de filtrage selon la revendication 4, **caractérisé en ce que** la conduite (SF) de la cellule filtrante (F1.0) est située au-dessous d'une bifurcation (F0.8) de la conduite d'amenée (F0.7) du tuyau collecteur d'eau de pluie (R).

6. Dispositif de filtrage selon la revendication 4, **caractérisé en ce que** la conduite de prélèvement (F1.2) de la cellule filtrante (F1.0) est un tuyau de montée qui commence au-dessus du fond de la cellule filtrante (F1.0) et débouche dans la conduite (SF).

7. Dispositif de filtrage selon une des revendications 4 ou 6, **caractérisé en ce que** la cellule filtrante (F1.0), la pompe (SP), la conduite (SF) et la conduite de prélèvement (F1.2) forment un élément prémonté.

8. Dispositif de filtrage selon une des revendications 4, 6 ou 7, **caractérisé en ce que** plusieurs cellules filtrantes (F1.0, F2.0) sont affectées à une pompe (SP) qui est raccordée en écoulement, par le biais de la conduite (SF), aux conduites de prélèvement (F1.2, F2.2) respectivement correspondantes des cellules filtrantes (F1.0, F2.0), les cellules filtrantes (F1.0, F2.0) étant raccordées de façon communicante à un tuyau d'amenée (F0.7) commun.

9. Réservoir collecteur d'eau de pluie (Z) avec un dispositif de filtrage (F) selon une des revendications 1 à 8.

10. Réservoir collecteur d'eau de pluie (Z) selon la revendication 9, **caractérisé en ce que** l'eau de pluie peut être prélevée du réservoir collecteur d'eau de pluie (Z) par le biais d'une pompe (P) et d'une conduite de prélèvement (Z1.1) et être conduite à un réseau d'eau non potable (N).
